# EUROPÄISCHE PATENTSCHRIFT

(11) **EP 2 095 085 B1**
(45) Veröffentlichungstag und Bekanntmachung des Hinweises auf die Patenterteilung: **22.02.2017**
(21) Anmeldenummer: 07816294.8
(22) Anmeldetag: 05.12.2007
(51) Int. Cl.: G01L 23/24, G01L 19/00

(54) **ADAPTER FÜR DRUCKSENSOREN**
ADAPTER FOR PRESSURE SENSORS
ADAPTATEUR POUR CAPTEURS DE PRESSION

(30) Priorität: 11.12.2006 CH 20112006
(43) Veröffentlichungstag der Anmeldung: 02.09.2009
(73) Patentinhaber: Kistler Holding AG, 8408 Winterthur (CH)
(72) Erfinder: WEBER, Alex, 8400 Winterthur (CH); STAIGER, Ulrich, 8260 Stein Am Rhein (CH); ENGELER, Paul, 8500 Frauenfeld (CH)
(86) Internationale Anmeldenummer: PCT/CH2007/000611
(87) Internationale Veröffentlichungsnummer: WO 2008/071022

(56) Entgegenhaltungen:
- EP-A- 0 715 159
- EP-A2- 0 574 046
- EP-A2- 0 637 736
- WO-A-00/65984
- DE-A1- 2 649 358
- DE-A1- 19 813 756
- GB-A- 2 019 007
- JP-A- H01 296 130
- US-A- 4 218 926
- US-A- 5 325 720
- US-A- 5 708 210
- US-A- 5 756 900
- US-A1- 2005 160 828

## Beschreibung

### Technisches Gebiet

Die Erfindung betrifft einen Adapter für Drucksensoren zum Durchführen von Langzeitzylinderdrucküberwachungen an Verbrennungsmotoren, umfassend ein Gehäuse mit einem Gaskanal, einen Anschluss zu einen Zylinderdeckel eines Verbrennungsmotors, eine hintere Öffnung des Gaskanals aus dem Gehäuse mit einer Vorrichtung zum gasdichten Verschliessen dieser hinteren Öffnung, sowie einen Anschluss zum Einsetzen eines Drucksensors mit einer Sensormembran 6.

### Stand der Technik

Adapter zum Anbringen von Drucksensoren an Verbrennungsmotoren werden beispielsweise an Grossdiesel wie Schiffsdieselmotoren verwendet zum Durchführen von Langzeitzylinderdrucküberwachungen. Solche Adapter werden mit einem dafür vorgesehenen Anschluss an Zylinderdeckel angebracht, welche ihrerseits eine Öffnung zum Zylinder aufweisen. Die Adapter umfassen ein Gehäuse sowie einen Gaskanal, der im eingebauten Zustand im Gasaustausch mit dem Gas im Zylinder stehen und somit insbesondere dem Gasdruck im Zylinder ausgesetzt ist.

Solche Adapter weisen weiter einen Anschluss zum Einsetzen eines Drucksensors mit einer Sensormembran auf, wobei die Sensormembran im eingesetzten Zustand zum Gaskanal vordringt und dem Gasdruck im Gaskanal ausgesetzt ist.

Herkömmliche Adapter haben Einbuchtungen, Verengungen und/oder Taschen an sensornahen Stellen, an welchen sich nach längerem Betrieb Ablagerungen festsetzen, wodurch die Messresultate beeinträchtigt werden. Im Schwerölbetrieb von Schiffsdieselmotoren umfassen diese Ablagerungen beispielsweise Rückstände aus Schmieröl sowie Kalk und Russ.

Um gute Messresultate zu gewährleisten, muss etwa alle zwei Tage der Sensor ausgebaut und der Adapter gereinigt werden. Dies ist ein enormer Unterhaltsaufwand, da für diesen Zweck der Betrieb des Motors, beispielsweise des Schiffsdieselmotors, während den Reinigungsarbeiten eingestellt werden muss.

Aus der EP 0715159 ist im Stand der Technik ein Überwachungs-Drucksensor mit einer Membran beschrieben, welcher auf einem Indikator- oder Indizierventil einer Brennkraftmaschine montiert und mit dem Brennraum verbunden ist. Wegen ständigem Verstopfen des Druckkanals und damit verbundenen Servicearbeiten wurde schliesslich in der genannten Schrift der sogenannte C-Sensor vorgestellt, der für denselben Zweck zuverlässig eingesetzt werden kann. Er umfasst einen Sensorkörper mit einer Druckmessbohrung, welche wiederum mit dem Brennraum verbunden ist. Nahe an dieser Druckmessbohrung ist tangential dazu in einer Dehnmessbohrung ein Dehnmesselement eingesetzt, welches die Dehnung des Sensorkörpers zuverlässig misst. Leider wird die Messung aber durch Fremdeinflüsse verfälscht, welche oft schwer zu kompensieren sind. Dies betrifft abgesehen von Temperatureinflüssen insbesondere Vibrationen, Schwingungen und Beschleunigungen. Der Genauigkeit solcher Sensoren sind daher in der Anwendung Grenzen gesetzt.

Die US 5325720 zeigt einen Drucksensor der weitgehend spaltfrei in einer Öffnung einer Wandung montierbar ist. Dazu wird eine Membran des Drucksensors mit Metall beschichtet und das Metall wird radial und axial gezielt entfernt, so dass der Drucksensor nach Montage über eine Gewindebohrung der Öffnung der Wandung bündig mit einer Testoberfläche der Wandung ist.

### Darstellung der Erfindung

Aufgabe der vorliegenden Erfindung ist es, einen Adapter zum Anbringen eines Drucksensors mit einer Sensormembran an einen Verbrennungsmotor zu beschreiben, der einen servicearmen Betrieb bietet.

Die Aufgabe wird gelöst durch die Kennzeichen des unabhängigen Patentanspruchs.

Die der Erfindung zugrunde liegende Idee besteht darin, dass die Übergangslinie der Öffnung im Gaskanal, zu der im eingesetzten Zustand die Sensormembran vordringt, um dem Gasdruck im Gaskanal ausgesetzt zu sein, in einer Ebene liegt. Die Übergangslinie bildet den Übergang von der Kontur des Gaskanals zum Anschluss an den Sensor.

Durch die flächige Ausgestaltung der Übergangslinie der Öffnung wird gewährleistet, dass die Sensormembran, welche in der Regel selbst mit einer flächigen Umrandung ausgestaltet ist und im eingebauten Zustand einen Teil der Kontur des Gaskanals bildet, einen möglichst stetigen Übergang zur unmittelbaren Umgebung des Gaskanals bildet. Somit wird verhindert, dass durch Kanten und Einbuchtungen Taschen gebildet werden, an denen sich Verunreinigungen bevorzugt ablagern und die Druckmessungen ungünstig beeinflussen.

### Kurze Beschreibung der Zeichnungen

Im Folgenden wird die Erfindung unter Beizug der Zeichnungen näher erklärt. Es zeigen
- Fig. 1: eine perspektivische Darstellung im Schnitt eines erfindungsgemässen Adapters mit Sensor;
- Fig. 2: eine perspektivische Darstellung im Schnitt eines erfindungsgemässen Adapters in alternativer Ausführungsform mit Sensor;
- Fig. 3: eine Darstellung im Schnitt eines erfindungsgemässen Adapters mit Sensor in einer alternativen Ausführungsform;
- Fig. 4: eine Darstellung im Schnitt eines erfindungsgemässen Adapters mit Sensor in einer Ausführungsform mit einer Biegung.

### Wege zur Ausführung der Erfindung

Die Bezugszeichen wurden in beiden Zeichnungen beibehalten.

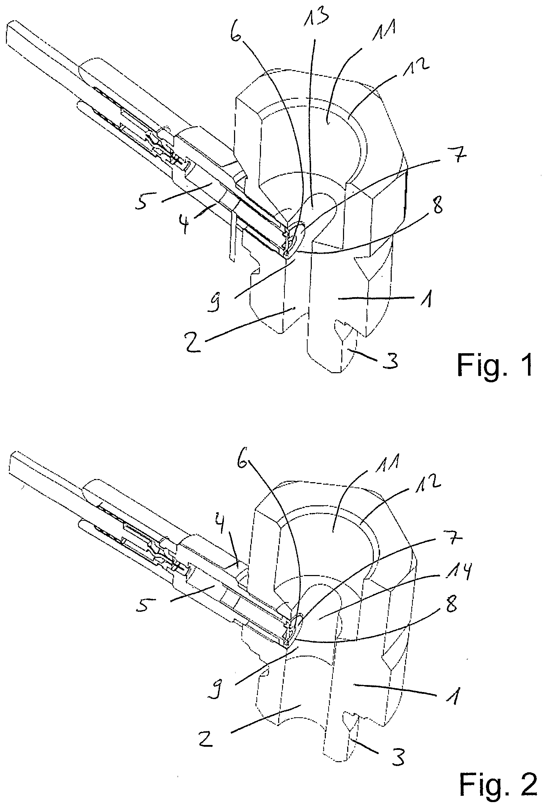

Die Fig. 1 und 2 zeigen jeweils eine perspektivische Darstellung im Schnitt eines erfindungsgemässen Adapters, in dem ein Drucksensor 5 angebracht ist. Ein solcher Adapter eignet sich insbesondere zum Durchführen von Langzeitzylinderdruckmessungen und -überwachungen an Verbrennungsmotoren, insbesondere an Grossdieselmotoren wie Schiffsmotoren. Der Adapter umfasst ein Gehäuse 1, welches inwändig die Kontur eines Gaskanals 2 definiert.

Das Gehäuse 1 weist ferner einen Anschluss 3 zu einem Zylinderdeckel eines Verbrennungsmotors auf. Im montierten Zustand ist durch diesen Anschluss 3 eine Gasverbindung vom Zylinder zum Gaskanal 2 gewährleistet.

Am anderen Ende des Gehäuses 1, gegenüber dem Anschluss 3 zu einem Zylinderdeckel, ist eine hintere Öffnung 11 des Gaskanals 2 vorgesehen mit einer Vorrichtung 12 zum gasdichtern Verschliessen dieser hinteren Öffnung 11. Diese Vorrichtung 12 kann beispielsweise ein Innengewinde in dieser Öffnung sein, in welches ein Indizierventil eingesetzt werden kann. Somit kann der Adapter an der Stelle in den Zylinderdeckel eingesetzt werden, die zum Anbringen eines Indizierventils vorgesehen ist. Das Indizierventil wird dann an der dafür vorgesehenen Vorrichtung 12 am Adapter angebracht. Sämtliche Anschlüsse am Adapter müssen gasdichte Verbindungen ermöglichen, um keinen Druckverlust am Zylinder zu verursachen.

Zudem umfasst der Adapter einen Anschluss 4 zum Einsetzen eines Drucksensors 5 mit einer Sensormembran 6. Im eingesetzten Zustand dringt die Sensormembran 6 zum Gaskanal 2 vor, wodurch die Sensormembran 6 dem Druck im Gaskanal 2 und dem Druck im Zylinder ausgesetzt ist zum Durchführen von Druckmessungen. Zu diesem Zweck ist im Gaskanal 2 eine Öffnung 7 für den Vorstoss der Membran vorgesehen mit einer Übergangslinie 8, welche den Übergang von der Kontur des Gaskanals 2 zum Anschluss 4 des Drucksensors 5 bildet. Erfindungsgemäss liegt die Übergangslinie 8 der Öffnung 7 in einer Ebene. Somit kann die Sensormembran 6, welche in der Regel selbst mit einer flächigen Umrandung ausgestaltet ist, bündig an die Übergangslinie 8 der Öffnung 7 montiert werden, ohne dass dadurch Taschen gebildet werden, in denen sich Verunreinigungen wie Russ ablagern können. Dadurch bleibt die Oberfläche der Sensormembran 6 sauber, wodurch die mit dem Drucksensor 5 durchgeführte Messungen zuverlässige Werte liefern können.

In ersten Ausführungsbeispielen, dargestellt in Fig. 1 und 2, bildet die Kontur des Gaskanal 2 in der Umgebung 9 der Übergangslinie 8 der Öffnung 7 eine ebene Fläche.

Diese ebene Fläche in der Umgebung 9 der Sensormembran 6 kann, wie in Fig. 1 dargestellt, durch ein durchgehendes Langloch 13 ausgestaltet sein, welches bis zum Anschluss 3 zum Zylinderdeckel reicht. Alternativ dazu kann diese ebene Fläche auch, wie in Fig. 2 dargestellt, durch ein lokales Langloch 14 erreicht werden. Dieses wird beispielsweise durch eine lokale Fräsung an dieser Stelle erreicht.

Zum Entfernen von Verunreinigungen, welche sich dennoch an den verschiedenen Stellen im Adapter bilden, kann von Zeit zu Zeit bei laufendem Motor das Indizierventil kurz geöffnet werden, wobei durch den so entstandenen Druck Verunreinigungen am Adapter weggeblasen werden. In den Figuren ist durch Pfeile die Strömung dargestellt, die sich beim Öffnen des Indizierventil bildet. Wenn kein Indizierventil vorhanden ist, kann auch die hintere Öffnung 11 für kurze Zeit freigesetzt werden, durch Öffnen der Vorrichtung 12 zum gasdichten Verschliessen. Es hat sich gezeigt, dass diese Reinigung ausreicht, solange sich der Schmutz nicht zu sehr an Kanten festsetzen kann. Bei Anordnungen nach dem Stand der Technik würde eine solche Reinigung nicht ausreichen, um die Sensormembran 6 zu reinigen.

Eine erfinderische Ausführungsform ist insbesondere gebildet durch einen hier beschriebenen Adapter mit einem darin eingesetzten Drucksensor 5 mit einer Sensormembran 6, welche zum Gaskanal 2 vordringt und mit diesem eine gemeinsame, ebene Fläche bildet.

Durch die hier beschriebenen Vorrichtungen lassen sich Langzeitzylinderdruckmessungen und -überwachungen an Verbrennungsmotoren ohne grossen Wartungsaufwand durchführen.

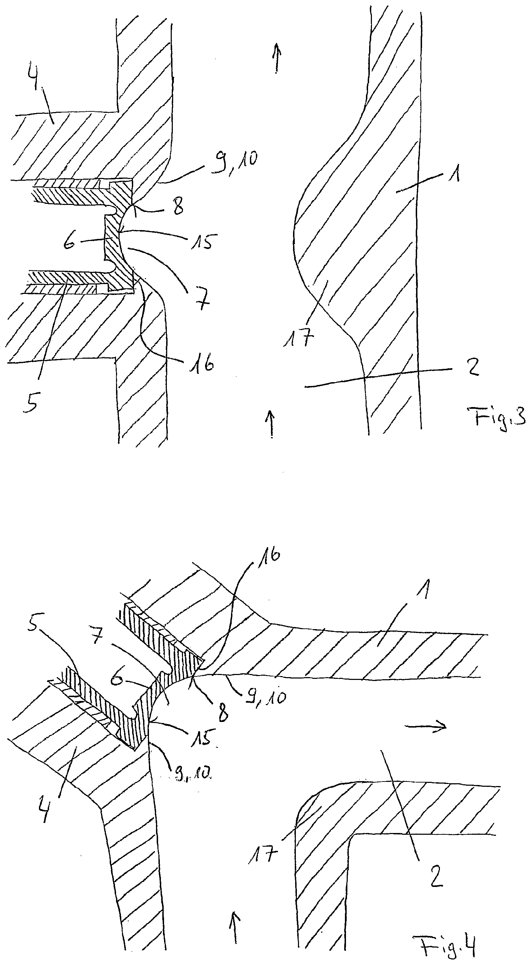

Weitere Ausführungsbeispiele sind in den Figuren 3 und 4 dargestellt. Diese Ausführungsformen sind speziell für frontdichtende Drucksensoren 5 geeignet. Frontdichtende Drucksensoren 5 haben für diese Anwendung gegenüber Drucksensoren 5 mit einer hinten liegenden Dichtung den Vorteil, dass kein Spalt zwischen der Sensormembran 6 und dem Adapter bei der Übergangslinie 8 der Öffnung 7 vorhanden ist. In diesem Spalt kann sich Russ ablagern und die Sensormembran 6 blockieren, wodurch sie nicht mehr frei schwingen kann. Frontdichtende Drucksensoren 5 weisen keinen Spalt auf, da sie an einer frontalen Zone direkt an einer Anpressfläche 16 auf das Gehäuse 1 des Adapters gepresst werden können. Die Anpressfläche 16 umgibt die Öffnung 7 auf der Gehäuseseite und ist durch die Übergangslinie 8 definiert. Auch in diesem Ausführungsbeispiel liegt die Übergangslinie 8 der Öffnung 7 in einer Ebene.

Die Umgebung 9 der Übergangslinie 8 auf der Seite des Gaskanals 2 bildet in diesem Ausführungsbeispiel eine trichterförmige Fläche 10. Somit bildet das Gehäuse 1 um die Übergangslinie 8 einen spitzen Winkel. Die Flanken des Trichters können insbesondere gerade oder gewölbt sein. Wichtig ist, dass der Übergang von der Kontur des Gaskanals 2 zur Sensormembran 6, die im eingebauten Zustand einen Teil dieser Kontur bildet, einen stetigen Übergang im Bereich der Übergangslinie 8 bildet, damit keine Taschen gebildet werden, in denen sich Verunreinigungen wie Russ ablagern können.

Um die Strömungsverhältnisse im Bereich der Sensormembran 6 zu optimieren, kann der Gaskanal 2, gegenüberliegend von der trichterförmigen Fläche 10, eine Ausbuchtung 17 aufweisen. Dadurch wird gewährleistet, dass in der Umgebung 9 der Sensormembran 6 bei einer Durchspülung des Adapters, wie sie für die Beispiele in Fig. 1 und 2 beschrieben wurden, eine Strömung erzeugt wird, die eine gute Reinigung verursacht.

Konstruktive Vorteile bei der Herstellung eines solchen erfindungsgemässen Adapters werden erreicht, wenn der Anschluss 4 für den Drucksensor in einer Biegung des Gaskanals 2 angeordnet ist, wie in Fig. 4 dargestellt. In einer Biegung sind sowohl die trichterförmige Fläche 10, wie auch die Ausbuchtung 17 natürlich vorhanden. Der Anschluss 4 für den Drucksensor 5 ist dann auf der Aussenseite dieser Biegung angebracht.

Vorzugsweise werden für diese Anordnungen der Figuren 3 und 4 frontdichtend Drucksensoren 5 angebracht. Solche Drucksensoren 5 haben vorzugsweise eine Sensormembran 6 mit einer konkaven Oberfläche 15, sodass der stetige Übergang von der Kontur des Gaskanals 2 zur Oberfläche der Sensormembran 6 gewährleistet ist, ohne Bildung von Taschen. In den Figuren 3 und 4 ist dieser stetige Übergang ersichtlich.

Beide hier beschriebene Ausführungsbeispiele der Adapter haben Vorteile. Die ersten in Fig. 1 und 2 dargestellten sind einfacher in der Herstellung, die weiteren in Fig. 3 und 4 dargestellten gewährleisten Dank der Frontdichtung des Drucksensors 5 eine bessere Funktionsfähigkeit durch bessere Sauberhaltung der spaltfreien Membranumgebung.

### Bezugszeichenliste

- 1: Gehäuse
- 2: Gaskanal, Kontur des Gaskanals
- 3: Anschluss zu einem Zylinderdeckel
- 4: Anschluss zum Einsetzen eines Drucksensors
- 5: Drucksensor
- 6: Sensormembran
- 7: Öffnung für Sensormembran
- 8: Übergangslinie
- 9: Umgebung der Übergangslinie
- 10: Trichterförmige Fläche
- 11: Hintere Öffnung
- 12: Vorrichtung zum gasdichten Verschliessen
- 13: Langloch, durchgezogen
- 14: Langloch, lokal
- 15: Konkave Oberfläche
- 16: Anpressfläche
- 17: Ausbuchtung

## Patentansprüche

1. Adapter für Drucksensoren zum Durchführen von Langzeitzylinderdrucküberwachungen an Verbrennungsmotoren umfassend ein Gehäuse (1) welches inwändig eine Kontur eines Gaskanals (2) definiert, einen Anschluss (3) zu einem Zylinderdeckel eines Verbrennungsmotors zum Herstellen einer Gasverbindung zwischen einem Inneren eines Zylinders und dem Gaskanal (2), eine hintere Öffnung (11) des Gaskanals (2) aus dem Gehäuse (1) mit einer Vorrichtung (12) zum gasdichten Verschliessen dieser hinteren Öffnung (11), einen Anschluss (4) eines Drucksensors (5) zum Einsetzen eines Drucksensors (5) mit einer Sensormembran (6), wobei die Sensormembran (6) im eingesetzten Zustand zu einer Öffnung (7) im Gaskanal (2) vordringt und einem Gasdruck im Gaskanal (2) ausgesetzt ist, und wobei diese Öffnung (7) eine Übergangslinie (8) aufweist, welche einen Übergang von einer Kontur des Gaskanals (2) zum Anschluss (4) des Drucksensors (5) bildet, **dadurch gekennzeichnet, dass** die Übergangslinie (8) der Öffnung (7) in einer Ebene liegt, dass die Sensormembran (6) im eingebauten Zustand einen Teil der Kontur des Gaskanals (2) bildet, und dass der Übergang von der Kontur des Gaskanals (2) zur Sensormembran (6) einen stetigen Übergang im Bereich der Übergangslinie (8) bildet.

2. Adapter nach Anspruch 1, **dadurch gekennzeichnet, dass** an diese Vorrichtung (12) ein Indizierventil anschliessbar ist.

3. Adapter nach einem der vorhergehenden Ansprüche, umfassend einen Drucksensor (5) mit einer Sensormembran (6).

4. Adapter nach einem der vorhergehenden Ansprüche, **dadurch gekennzeichnet, dass** die Kontur des Gaskanal (2) in der Umgebung (9) der Übergangslinie (8) der Öffnung (7) eine ebene Fläche bildet.

5. Adapter nach Anspruch 4, **dadurch gekennzeichnet, dass** die ebene Fläche Teil eines durchgehenden Langlochs (13) ist.

6. Adapter nach Anspruch 4, **dadurch gekennzeichnet, dass** die ebene Fläche Teil eines lokalen Langlochs (14) ist.

7. Adapter nach einem der Ansprüche 1 bis 3, **dadurch gekennzeichnet, dass** die Kontur des Gaskanals (2) in der Umgebung (9) der Übergangslinie (8) der Öffnung (7) eine trichterförmige Fläche (10) bildet, wobei die Flanken insbesondere gerade oder gewölbte sein können.

8. Adapter nach Anspruch 7, **dadurch gekennzeichnet, dass** der Anschluss (4) für einen frontdichtenden Drucksensor ist.

9. Adapter nach Anspruch 7 oder 8, **dadurch gekennzeichnet, dass** der Gaskanal (2) in der Umgebung gegenüberliegend von der trichterförmigen Fläche (10) eine Ausbuchtung aufweist.

10. Adapter nach einem der Ansprüche 7 bis 9, **dadurch gekennzeichnet, dass** der Verlauf des Gaskanals (2) im Bereich des Anschluss (4) für den Drucksensor (5) eine Biegung beschreibt, wobei der Anschlusses (4) auf der Aussenseite der Biegung angeordnet ist.

11. Adapter nach einem der Ansprüche 7 bis 10 mit Rückbezug auf Anspruch 3, **dadurch gekennzeichnet, dass** die Sensormembran (6) eine konkave Oberfläche (15) aufweist.

12. Adapter nach Anspruch 11, **dadurch gekennzeichnet, dass** die konkave Oberfläche (15) einen stetigen Übergang zur trichterförmigen Fläche (10) bildet.

## Claims

1. An adapter for pressure sensors for carrying out long-term cylinder pressure monitoring on internal combustion engines comprising a housing (1) that defines the contour of a gas duct (2) by its inner walls, a connection (3) to a cylinder cover of an internal combustion engine to generate a gas connection between the interior of a cylinder and the gas duct (2), a rear opening (11) of the gas duct (2) out of the housing (1) having an apparatus (12) for gastight sealing of said rear opening (11), a connection (4) of a pressure sensor (5) for inserting a pressure sensor (5) with a sensor membrane (6) wherein said sensor membrane (6) in the inserted state reaches until an opening (7) in the gas duct (2) and is exposed to a gas pressure within the gas duct (2) and wherein said opening (7) has a transition line (8) that forms the transition from a contour of the gas duct (2) to the connection (4) of the pressure sensor, **characterized in that** said transition line (8) of the opening (7) is in a plane, that said sensor membrane (6) in the integrated state forms part of the contour of the gas duct (2), and that the transition from said contour of the gas duct (2) to said sensor membrane (6) forms a continuous transition in the region of the transition line (8).

2. The adapter according to claim 1 **characterized in that** an indicator valve can be attached to said apparatus (12).

3. The adapter according to any of the preceding claims comprising a pressure sensor (5) with a sensor membrane (6).

4. The adapter according to any of the preceding claims **characterized in that** the contour of the gas duct (2) forms a planar surface in the circumference (9) of the transition line (8) of the opening (7).

5. The adapter according to claim 4 **characterized in that** the planar surface is part of an elongated through hole (13).

6. The adapter according to claim 4 **characterized in that** the planar surface is part of a local elongated hole (14).

7. The adapter according to any of the claims 1 to 3 **characterized in that** the contour of the gas duct (2) in the circumference (9) of the transition line (8) of the opening (7) forms a funnel shaped surface (10) wherein the slopes thereof can be in particular straight or curved.

8. The adapter according to claim 7 **characterized in that** the connection (4) is for a front sealing pressure sensor.

9. The adapter according to claim 7 or claim 8 **characterized in that** the gas duct (2) has a bulge in the circumference opposite of the funnel shaped surface (10).

10. The adapter according to any of the claims 7 to 9 **characterized in that** the course of the gas duct (2) in the region of the connection (4) for the pressure sensor (5) has a bend wherein said connection (4) is arranged on the outside of the bend.

11. The adapter according to any of the claims 7 to 10 referring to claim 3 **characterized in that** the sensor membrane (6) has a concave surface (15).

12. The adapter according to claim 11 **characterized in that** the concave surface (15) forms a continuous transition to the funnel shaped surface (10).

## Revendications

1. Un adaptateur pour capteurs de pression destiné à effectuer la surveillance à long terme de la pression dans les cylindres sur les moteurs à combustion interne comprenant un boîtier (1) qui sert à définir, par ses parois internes, le contour d'un canal de gaz (2), un raccord (3) à un couvercle de cylindre d'un moteur à combustion interne de manière à former un raccordement au gaz entre l'intérieur d'un cylindre et le canal de gaz (2), une ouverture arrière (11) du canal de gaz (2) sortant du boîtier (1) ayant un dispositif (12) pour obturer ladite ouverture arrière (11) d'une façon étanche aux gaz, un raccord (4) d'un capteur de pression (5) pour insérer un capteur de pression (5) muni d'une membrane de capteur (6) dans lequel ladite membrane de capteur (6), à l'état inséré, s'étend jusqu'à une ouverture (7) dans le canal de gaz (2) et est exposée à une pression du gaz au sein du canal de gaz (2), et dans lequel ladite ouverture (7) comporte une ligne de transition (8) formant la transition d'un contour du canal de gaz (2) vers le raccord (4) du capteur de pression, **caractérisé en ce que** ladite ligne de transition (8) de l'ouverture (7) est dans un plan, ladite membrane de capteur (6), à l'état monté, fait partie du contour du canal de gaz (2) et la transition dudit contour du canal de gaz (2) vers la membrane de capteur (6) est une transition continue dans la zone de la ligne de transition (8).

2. L'adaptateur selon la revendication 1 **caractérisé en ce qu'**une soupape d'indication peut être fixée audit dispositif (12).

3. L'adaptateur selon l'une quelconque des revendications précédentes comprenant un capteur de pression (5) muni d'une membrane de capteur (6).

4. L'adaptateur selon l'une quelconque des revendications précédentes **caractérisé en ce que** le contour du canal de gaz (2) forme une face plane dans la circonférence (9) de la ligne de transition (8) de l'ouverture (7).

5. L'adaptateur selon la revendication 4 **caractérisé en ce que** la face plane fait partie d'un trou oblong traversant (13).

6. L'adaptateur selon la revendication 4 **caractérisé en ce que** la face plane fait partie d'un trou oblong local (14).

7. L'adaptateur selon l'une quelconque des revendications 1 à 3 **caractérisé en ce que** le contour du canal de gaz (2), dans la circonférence (9) de la ligne de transition (8) de l'ouverture (7), forme une surface en forme d'entonnoir (10) dont les flancs peuvent être notamment cintrés ou rectilignes.

8. L'adaptateur selon la revendication 7 **caractérisé en ce que** le raccord (4) est destiné pour un capteur de pression à étanchéité frontale.

9. L'adaptateur selon la revendication 7 ou 8 **caractérisé en ce que** le canal de gaz (2) possède un renflement dans la circonférence opposée à la surface en forme d'entonnoir (10).

10. L'adaptateur selon l'une quelconque des revendications 7 à 9 **caractérisé en ce que** le parcours du canal de gaz (2), dans la région du raccord (4) audit capteur de pression (5), présente une courbure et ledit raccord (4) étant disposé sur le côté extérieur de ladite courbure.

11. L'adaptateur selon l'une quelconque des revendications 7 à 10 en faisant allusion à la revendication 3 **caractérisé en ce que** ladite membrane de capteur (6) présente une surface concave (15).

12. L'adaptateur selon la revendication 11 **caractérisé en ce que** ladite surface concave (15) fait une transition continue vers la surface en forme d'entonnoir (10).
